# EUROPEAN PATENT APPLICATION

(11) **EP 3 073 593 A1**
(43) Date of publication of application: **28.09.2016**
(21) Application number: 16161704.8
(22) Date of filing: 22.03.2016
(51) Int. Cl.: H02G 9/10

(54) **PROCESS FOR ANCHORING CABLES IN A CONDUIT AND SO-PRODUCED CABLE-HOLDING CONDUIT**

(30) Priority: 24.03.2015 IT RM20150126
(71) Applicant: Mazzilli, Barbara, 00046 Grottaferrata (RM) (IT); Mazzilli, Luciano Maria, 00046 Grottaferrata (RM) (IT)
(72) Inventor: MAZZILLI, Mauro, 00040 Ariccia (RM) (IT)
(74) Representative: Leone, Mario

(57) **Abstract**

A process for anchoring cables in a duct, in particular coated copper cables which more and more are subjected to thefts aimed at the fraudulent recovery of the herein contained metal, comprises a step for filling the ducts including electric cables with a curing resin mixed with solid granules, so as to form one single piece with the duct once solidified, wherein the curing resin is a two-component resin, wherein the granules constitutes up to 90% of the total filling volume, with a minimum of 75%.

## Description

### CONTEXT OF THE INVENTION

### 1. Technical field of the invention

The present invention has as subject a process for anchoring cables in a duct, in particular coated copper cables which more and more are subjected to thefts aimed at the fraudulent recovery of the herein contained metal. The invention also relates to a cable-carrying duct modified according to said process.

### 2. Description of the state of art

The problem of the copper theft is becoming more and more urgent over the years: in reality copper is a precious metal and it is widely used in electric ducts which are often accessible to ill-intentioned people. Such accessibility, notwithstanding the high voltage presence, eases the removal thereof which causes serious material damages both due to the material loss and the interruption of the electric service, often causing the interruption of entire railroad and underground lines. Moreover, even whoever performs these thefts in any case is exposed to serious risks for his/her safety.

The problem of the copper-made cable removal is particularly felt in the ground lines, wherein the cables are usually buried and/or arranged in open or closed ducts, usually made of concrete. Notwithstanding all precautions which are taken, often it is possible extracting the cables from the ground by cutting them at the ends and then pulling them from one of the ends.

In order to obviate this drawback, one has tried to make such ducts as much as inaccessible and protected as possible, thus increasing the linear cost of the electric ducts on the ground but without obtaining real results. Examples of anti-theft systems for cables are described in the British patent application Nr. GB 2,470,977 A1, in the Australian patent application Nr. AU 198769592 A, and in the US patents Nr. 6,648,277 B2 and Nr. 8,474,780 B2.

The United Kingdom patent Nr. 921,005 describes a process for injecting a curing resin in a tubular casing including electric cables.

### SUMMARY OF THE INVENTION

The technical problem underlying the present invention is to provide an anchoring process allowing to obviate the drawback mentioned with reference to the known art.

Such problem is solved by a process as specified above characterizing in that it comprises a step for filling the ducts containing electric cables with a curing resin mixed with solid granules, so as to form one single piece with the duct once solidified, wherein the curing resin is a two-component resin, wherein the granules constitutes up to 90% of the total filling volume, with a minimum of 75%.

The main advantage of the process according to the present invention lies in allowing the easy laying of electric pipes without the possibility of separating the cables from the respective ducts; likewise, the process can be used for protecting already existing electric pipes.

It is to be meant, among other things, that the present invention can be easily applied to ducts made of concrete or other material, such as those which will be described hereinafter, or to longitudinal excavations which are used as ducts, or even tubular ducts.

Furthermore, the duct can be obtained by a provisional reinforcement, obtained with a suitable formwork assembled directly on the passing site of cables, which is then removed completely or partially. The formwork can be of any type, as suitable to be separated completely or partially from the hardened resin including the cables once the process is concluded.

Furthermore, if a duct made of concrete or other material includes a superabundant number of cables, so that some thereof project from the top of the duct, it can be provided with temporary extensions at the height of the side walls, for example made of wood. Subsequently, the process according to the invention is implemented so that all cables are kept into the curing resin implementing a single block with cables and duct. In the end, the extensions can be removed.

The extensions can be implemented with L-shaped-cross profiles, wherein one side is laid onto the upper edge of the duct and fixed therein, whereas the other one acts as containment.

A similar process can be used to fasten cables and ducts already present and already treated according to the process according to the invention: the cables will be added above the already trapped cables and will be treated in the still empty duct portion, with the help of possible extensions.

According to a preferred version of the invention, even the duct is made of a solidified material including a curing resin equal or similar to the one used in the process according to the invention. The affinity between the resins will concur in implementing one single anti-theft block including the cables to be protected.

According to another preferred version of the invention, before applying the process, the cables can be tied up therebetween and/or to the duct including them, by means of bands, ropes, steel bands made of plastic or metal material, in case anchored to the ducts by means of fastening elements in turn fastened in conventional way.

The present invention will be described hereinafter according to a preferred embodiment example thereof, provided by way of example and not for limitative purposes with reference to the enclosed drawings.

### BRIEF DESCRIPTION OF THE DRAWINGS

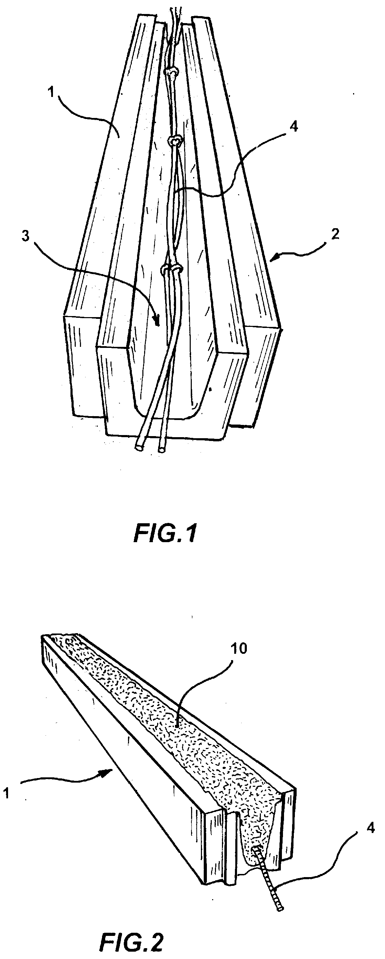

* figure 1 shows a duct made of concrete, called tile, provided with electric cables before the anchoring steps;
* figure 2 shows the duct of figure 1 once the anchoring is completed;
* figure 3 shows a tract of electric pipe formed by numerous ducts arranged in series;
* figure 4 shows a section typical of a duct used in the process according to the invention;
* figure 5 shows various types of means for fastening the cables inside the duct; and
* figure 6 shows a perspective view of an additional type of means for fastening the cables inside the duct.

### DETAILED DESCRIPTION OF PREFERRED VERSIONS OF THE INVENTION

By referring to the figures, a duct, also called tile, is represented, designated with 1. It is made of concrete and it is suitable to be laid prefabricated to form electro-ducts laid on the ground. It has a cavity delimited by side walls 2 and a bottom 3; it further can have even a (not represented) cover constituted by a flat plate, for example still made of concrete.

In a preliminary step it includes one or more electric cables designated with 4.

The herein described process provides that the above-described ducts are provided by means for fastening the cables to the ducts.

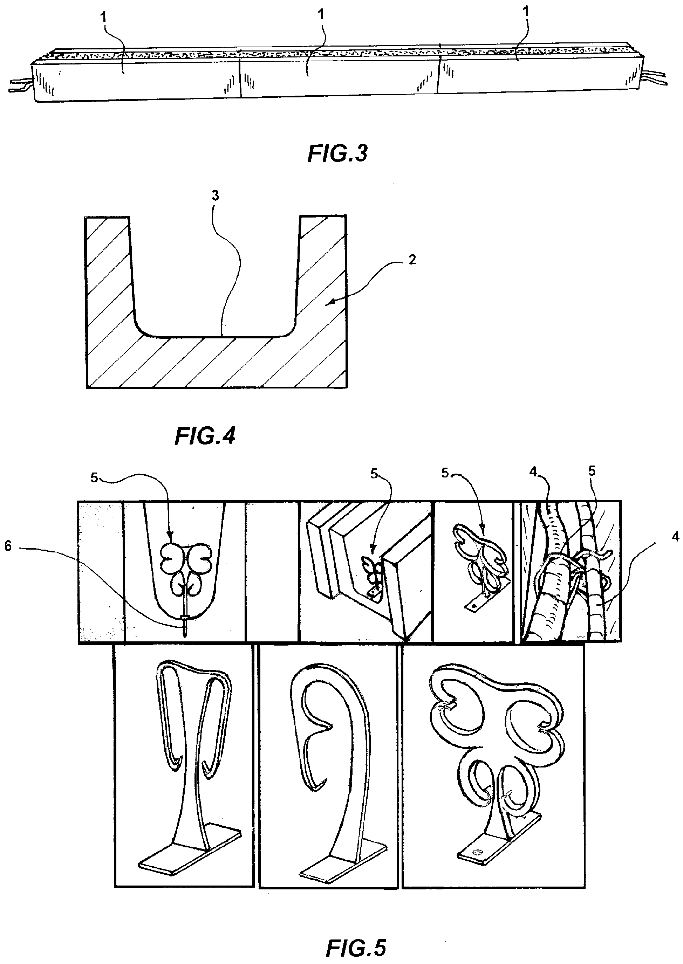

Such fastening means can assume numerous forms: by referring to figure 5 different examples of metallic hooks 5 are shown which are fastened onto the bottom 3 of the ducts, for example by means of expansion plugs 6.

These hooks 4 can have different shapes according to the number of cables which have to be kept fastened, to this purpose they can be formed by one or more volutes associated to a pillar fastened to a base plate having fastening holes (figure 5).

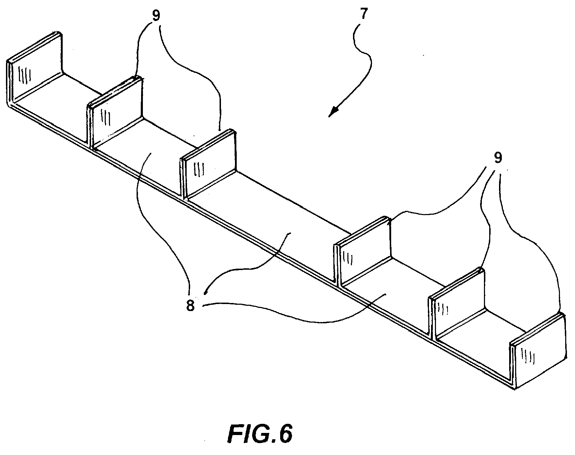

According to a variant, it is possible providing, as fastening means, a plurality of flexible straps 7 (figure 6) having fastening tongues 9 branching from one base strip 8. These straps can be made of flexible plastic material, such as nylon.

As it is known, the presence of several tongues 9 allows cutting the straps 7 to length according to the duct width 1. The straps can be fastened to the duct made of concrete by means of nails, in particular nails applied by pressure by means of a suitable nail gun.

The above-described fastening means has the function of keeping the cables 4 in a prefixed position in the subsequent anchoring step, and even to add an obstacle to the extraction of the cable in case it is pulled vertically with respect to the duct 1.

According to a variant, the duct in turn has (not represented) fastening holes, alternated on the length thereof. In case it is not provided with them, such holes can be used formed with a suitable drill. Such holes can be used to fasten the duct to the ground, for example by means of stakes, screw stakes, hooks and so on.

A curing resin is then provided which, in a preliminary phase, could be applied to the inner surfaces of the duct and to the cables by means of rollers or brushes.

The process then comprises a step wherein a mixture 10 of curing resin, the one already applied to the surfaces, and solid granules, is used to fill up the duct and it is made to harden, so that the body formed by the curing resin, by the granules and by the duct constitutes one single piece.

According to a preferred version, the curing resin is a hygrosetting resin, that is a resin which hardens when it is wet to absorb water.

Upon using the present process, said curing resin is a two-component resin, which implements a setting or hygrosetting mixture only when the two starting components are mixed in loco, that is in the duct. An example of resin of this type is a polyurethane resin.

Furthermore, upon using the present process, the granules constitutes up to 90% of the total filling volume, with a minimum of 75%.

According to a preferred version said granules can include a polyester granulate and a vitreous particulate, possibly with cutting edges, which has the function of preventing the rodents to nibble the filling.

The above-described process thus implements an anti-theft system mainly devised to prevent or however constitute a valid deterrent for the extraction and theft of buried copper cables inserted in concrete ducts.

The process can be performed by having available the following main elements:
- means for fastening electric cables, in particular the fastening straps made of a material which can be ABS, polystyrene, PP, isotactic PP, PE, nylon, polycarbonate or other thermoplastic materials; the shape is devised depending upon the different functions, or to be easily fastened to the tile by means of concrete nails; or to house easily the different cables with different diameter, in variable number; or to allow positioning the cable towards the central portion of the hardened compound, that is the best position to prevent the cables from being extracted from the hardened compound, surely more problematic with respect to the relatively easy extractability of the peripheral cables;
- the resin: together with the particulate (once the hardening has taken place) it implements the end hardened compound, as filler of the duct implemented by concrete ducts arranged subsequently one after the other one;
- the particulate, consisting in granules made of polyester or similar materials and presence of glass granules with anti-rodent function;
- concrete nails: the use thereof makes the process versatile and cheap with respect to any other solution: in fact, the manual skill connected to the fastening of the fairleads to the concrete duct by means of riveting involves decidedly low installation time, the procedures do not require specialized training.

It is to be meant that upon implementing the process fairleads with simple shape can be used.

As far as the resin/filler ratio is concerned, generally the percentage of granulate on the total can be about 80%, with a range comprised between 75% and 90%.

The generally used resin is a one-component or a two-component polyurethane hydrosetting material, that is with water-setting mechanism. Variants could provide the use of other resins. The resin selection is a compromise of different properties so as to have optimum availability, transportation, amalgamating possibility, cheapness, low hardening time, optimum interface resistance to the particulate, cohesion and compaction of the implemented compound once the hardening has taken place.

It is further to be meant that the above-described process can be applied to ducts already existing on the territory.

In this case, the process provides:
- digging-up of the line of underground passages;
- emptying the sandy filler inside the underground passage;
- cleaning the cables;
- spraying by means of a manual pump of pure resin on the inner wall of the underground passage without catalysing agent (water) qualitatively, that is by making attention to the close the pump nozzle to avoid the contact with humidity of outer air which could make the nozzle to be obstructed due to the resin hardening;
- possible installation of a finned nail as means for fastening cables, so as to constitute, one the solidification has taken place, an integral joint between compound and concrete underground passage;
- before the cable laying, along the line of the underground passages arrangement of bags of thermoplastic granulate at regular intervals;
- cable laying;
- mixing and working the compound (granules + resin + water) inside a suitable container so as to ease the mixing and relative cleaning, or directly in a barrow, by pouring the amount related to a given height of resulting compound in the underground passage, for example 80 mm from the bottom;
- once the deposit has taken place it is advisable to rivet the resulting system compound + cables.

To the above-described process a person skilled in the art, with the purpose of satisfying additional and contingent needs, could introduce several additional modifications and variants, however all within the protective scope of the present invention, as defined by the enclosed claims.

## Claims

1. A process for anchoring cables in a duct, in particular coated copper cables, comprising a step for filling up the duct including electric cables with a curing resin mixed with solid granules, so as to form one single piece with the duct once solidified, **characterized in that** said curing resin is a two-component resin, wherein the granules constitute up to 90% of the total filling volume, with a minimum of 75%.

2. The process according to claim 1, wherein said curing resin, in a preliminary step, is applied to the inner surfaces of the duct.

3. The process according to claim 1, wherein the curing resin is a hygrosetting resin.

4. The process according to claim 1, wherein said granules comprise a polyester granulate and a vitreous particulate, possibly with cutting edges, having the function of preventing the rodents to nibble the filler.

5. The process according to claim 1, wherein an existing electro-duct is treated by the following steps of:
• digging up the line of underground passages;
• emptying the sandy filler inside the underground passage;
• cleaning the cables;
• spraying resin on the inner surfaces of the duct;
• possible installation of means for fastening the cables;
• cable laying;
• mixing and working the compound (granules + resin + water) inside a suitable container so as to ease the mixing and relative cleaning.

6. The process according to claim 1, wherein the duct is a concrete duct.

7. The process according to claim 1 or 6, wherein means for fastening cables to the ducts are provided.

8. The process according to claim 7, wherein said fastening means comprises metallic hooks which are fastened onto the bottom of the ducts.

9. The process according to claim 7, wherein said fastening means comprises a plurality of flexible straps having fastening tongues branching from a base strip, made of a flexible plastic material and fastened by means of nails.

10. The process according to claim 9, wherein the straps are cut to length according to the duct width.

11. An electro-duct implemented according to anyone of the previous claims.

12. A use of a mixture comprising a curing resin and solid granules for filling ducts of electro-pipes, wherein said curing resin is a two-component resin, wherein the granules constitutes up to 90% of the total filling volume, with a minimum of 75%.
